# EUROPÄISCHE PATENTSCHRIFT

(11) **EP 2 538 768 B1**
(45) Veröffentlichungstag und Bekanntmachung des Hinweises auf die Patenterteilung: **12.11.2014**
(21) Anmeldenummer: 11703120.3
(22) Anmeldetag: 21.01.2011
(51) Int. Cl.: A01G 17/08

(54) **HALTEMITTEL ZUR FÜHRUNG VON RANKENGEWÄCHSEN**
RETAINING MEANS FOR TRAINING VINES
MOYENS DE RETENUE POUR LE GUIDAGE DE PLANTES GRIMPANTES

(30) Priorität: 22.02.2010 AT 2622010
(43) Veröffentlichungstag der Anmeldung: 02.01.2013
(73) Patentinhaber: Winterleitner, Otto, 8073 Feldkirchen (AT)
(72) Erfinder: Winterleitner, Otto, 8073 Feldkirchen (AT)
(74) Vertreter: Wildhack, Andreas
(86) Internationale Anmeldenummer: PCT/AT2011/000038
(87) Internationale Veröffentlichungsnummer: WO 2011/100771

(56) Entgegenhaltungen:
- FR-A1- 2 264 475
- FR-A1- 2 790 359
- FR-A7- 2 251 157

## Beschreibung

Die Erfindung bezieht sich auf eine Vorrichtung zum Anbringen von Haltemitteln bzw. Clips an Leitmitteln, insb. Schnüren, zur Führung von Rankengewächsen.

Weiters bezieht sich die Erfindung auf ein Verfahren zum Anbringen von Haltemitteln bzw. Clips an Leitmitteln, insb. an Schnüren, zur Führung von Rankengewächsen.

Die Erfindung betrifft auch ein Haltemittel bzw. einen Clip zur Führung von Rankengewächsen an einem Leitmittel, insb. an einer Schnur, bestehend aus zwei Halbschalen, welche miteinander mittels eines Filmscharniers mit einer Klemmvorrichtung für ein Leitmittel in Verbindung stehen und endenseitig eine aus kooperierenden Teilen bestehende Rastverbindung aufweist, wobei die Halbschalen im geschlossenen Zustand ein Führungshohl für eine Ranke bilden und die Halbschalen in Axrichtung des Hohls Im Querschnitt im Wesentlichen aus einem zylindrischen Mittelteil bestehen und nach außen mit gerundeten Übergängen weitergeführt zwei Flanschteile aufweisen.

Schließlich betrifft die Erfindung ein Mittel zur sequenziellen Bereitstellung von offenen, aus zwei Halbschalen gebildeten Haltemitteln für Rankengewächse.

Haltemittel bzw. Clips zur Führung von Trieben werden in Gärtnereien, Baumschulen, Plantagen, bspw. in Glashäusern und dgl. bei einer Pflanzenkultivierung verwendet, wobei die Ranken bei ihrem Wachstum entlang von Führungsmitteln geleitet werden.

Haltemittel in vielfältigen Ausführungsformen und für unterschiedliche Führungsmittel oder Pflanzenhaltestützen sind bekannt.

Im Wesentlichen bestehen die oben genannten Haltemittel aus zwei Halbschalen oder dgl. Elemente, die zusammengefügt und miteinander verbunden werden können und derart eine Öffnung bzw. ein Hohl ausbilden, in welcher/welchem eine wachsende Ranke einer Pflanze aufgenommen und in eine gewünschte Richtung leltbar ist. Eine Vielzahl von Haltemitteln weist neben dem Hohl einen Befestigungsteil oder eine Klemme für ein Leitmittel, ggf. für eine Schnur auf, um eine Positionierung des Clips zur gewünschten Führung bzw. gewünschten Leitung der Ranke zu erreichen.

Um bspw. ein Haltemittel bzw. einen Clip an einer im Wesentlichen nach oben führenden Schnur in einer gewünschten Position anbringen zu können, ist es bekannt, die Halbschalen desselben an einem Ende mit einem Filmscharnier verbunden auszuführen und diesem benachbart einen Klemmbereich vorzusehen, wobei am gegenüberliegenden Ende der Halbschalen Teile für die Rastverbindung ausgeformt sind. Bei einem Schließen der Halbschalen erfolgt auch ein Schließen des Klemmbereiches, so dass derart das Haltemittel rutschsicher seitlich an der Schnur in einer gewünschten Position festgelegt bzw. geklemmt werden kann.

Haltemittel sind zumeist Einzelteile mit offenen Halbschalen, die zur Entnahme für eine die Rankenenden befestigende Person ggf. in Schütten oder Säcken bereitgestellt werden. Einer im Wesentlichen vorgegebenen Rankenhöhe entsprechend wird nun jeweils ein offenes Haltemittel aus der Bereitstellung entnommen, am Leitmittel mit der Ranke positioniert und händisch zusammengeführt, wobei der Rastverschluss eine Verbindung der Halbschalen erstellt.

Bei einer Plantage bspw., in welcher eine Vielzahl an Rankengewächsen, insb. Rankenfruchtgewächsen wie Paprika. Tomaten, Gurken und dgl., kultiviert und dem Wachstum entsprechend die Triebe geleitet werden, bedeutet dieses Führen derselben an Leitmitteln durch Anbringen von Haltemitteln einen hohen Arbeits- und Zeitaufwand.

Aus der FR 2 790 359 ist ein Verfahren zur Befestigung von Stützmittel für Pflanzen an einer Schnur sowie eine dafür verwendete Vorrichtung bekannt geworden. Diese Verfahren ist weitgehend mechanisiert und erfolgt durch eine handgeführte Vorrichtung mit einem Elektromotor, der mittels eines Kabels von außen angespeist ist. Offengesteilte Halbschalen von Haltemitteln werden zusammenhängend gerichtet in einem Magazin, welches dem Handgriff gegenüberliegend, also oben, an der Vorrichtung positioniert ist, bereitgestellt.

Eine Aufgabe der Erfindung besteht darin, eine Vorrichtung der eingangs genannten Art zu schaffen, mittels welcher auf einfache Weise und bei hoher Taktfolge Haltemittel bzw. Clips an Leitmitteln zur Führung von Rankengewächsen angebracht werden können.

Eine weitere Aufgabe der Erfindung liegt in der Angabe eines Verfahrens zum Anbringen von Haltemitteln an Leitmitteln, welches Verfahren einen hohen Automatisierungsgrad aufweist.

Die Erfindung setzt sich auch zum Ziel, ein Haltemittel bzw. einen Clip zu erstellen, welches/welcher hohe Funktionssicherheit hat und leicht einsetzbar ist.

Ein weiteres Ziel der Erfindung besteht in der Schaffung eines Mittels zur sequenziellen Bereitstellung von offenen, aus zwei Halbschalen gebildeten Haltemitteln für Rankengewächse, welches in der Verwendung eine hohe Wirtschaftlichkeit gewährleistet.

Die gesteilte Aufgabe wird dadurch gelöst, dass die Vorrichtung mit mindestens einem bodenseitig bzw. unter einem Halteteil angeordneten Speicher, einem Magazin oder einem dgl. Teil zur sequenziellen Bereitsteilung von offenen und/oder mit Halbschalen ausgeformten Haltemitteln und einer mit diesem verbundenen Einrichtung zum Schließen der Halbschalen vom Haltemittel bei Festlegung desselben am Leitmittel und Umfassen der Ranke mit Handbetätigung gebildet ist und die Mechanik für eine Einzug und die sequenzielle Bereitstellung des offenen Haltemittels und die Einrichtung zum Schließen der Halbschalen desselben sowie dessen Freigabe wirkverbunden sind.

Die mit der Erfindung erzielten Vorteile sind im Wesentlichen darin zu sehen, dass mittels der Vorrichtung die Haltemittel mit offenen Halbschalen jeweils in eine Arbeitsposition gebracht werden und mit einer handbetätigbaren Einrichtung in dieser Vorrichtung sicher am Leitmittel festlegbar sind. Eine Handarbeit beschränkt sich dadurch nur auf ein Auslösen der Bereitstellung und ein werkzeuggebundenes Schließen der Haltemittel, was in kurzer Zeit erfolgen kann.

Ein Vorteil der Ausführungsform der Vorrichtung ergibt sich dadurch, dass das Teil zur sequenziellen Bereitstellung von offengesteilten, mit zwei Halbschalen gebildeten und mittels Filmscharniers verbundenen Haltemitteln bzw. Clips als Führungskanal mit einem von der Schließeinrichtung steuerbaren Einzugsmittel und Trennmittel für aneinandergereihte und miteinander zu einer Clip-Kette verbundene Haltemittel gebildet ist. Derart kann eine sequenzielle Bereitstellung der Halteteile vereinfacht gestattet und mit hoher Geschwindigkeit und Sicherheit erfolgen.

Wenn die Vorrichtung mit Handbetätigung gebildet ist und die Mechanik für einen Einzug und die sequentielle Bereitstellung des offenen Haltemittels und die Einrichtung zum Schließen der Halbschalen desselben sowie dessen Freigabe wirkverbunden sind, ist eine sichere Gesamtfunktion derselben erreichbar.

Ein einfaches und höchst exaktes Anbringen eines Haltemittels am Leitmittel wird mit einer bevorzugten Ausführungsform der Erfindung dadurch erreicht, dass die Vorrichtung in einem Verbindungsbereich des geöffnet im Schließbereich der Einrichtung positionierten Haltemittels senkrecht zur Schließebene mindestens eine, vorzugsweise zwei, distanzierte Vertiefung(en) bzw. einen, vorzugsweise zwei Sackschlitz(e) im Gehäuse zur Führung und Bereitstellung des Leitmittels im Verschlussbereich oder zur geführten Anlage derselben ein Filmscharnier des offenen Haltemittels aufweist.

Für eine einfache Verwendung, insb. bei einem Anbringen von Haltemitteln für Rankengewächse an im Wesentlichen vertikalen Führungsmitteln, ist es günstig, wenn diese Vorrichtung ein Halteteil, insb. ein durch eine menschliche Hand umfassbares Vorrichtungsteil, vorzugsweise in einer Pistolengriffform, und einen Hebel zum Auslösen und/oder Durchführen des Schließvorganges der Halbschalen des Haltemittels aufweist, wobei die Schließebene bzw. die Ebene, in weicher die Halbschalen beim Schließen des Haltemittels bewegt werden, im Wesentlichen im rechten Winkel zur Längserstreckung des Halteteiles bzw. Griffteiles positioniert ist.

Die weitere Aufgabe der Erfindung wird bei einem Verfahren der eingangs genannten Art dadurch gelöst, dass In einer Vorrichtung bei Aktivierung derselben aus einem Speicher, einem Magazin oder einem dgl. Teil jeweils ein Haltemittel im geöffneten, schließbereiten Zustand in eine Einrichtung eingebracht und für ein Schließen der Haltemittelteila durch diese positioniert wird, wonach mittels Führens der Vorrichtung ein Leitmittel senkrecht zur Schließebene bzw. Bewegungsebene in einem Verbindungsbereich der Haltemittelteile in Stellung gebracht oder an das Filmscharnier des geöffneten Haltemittels angelegt und eine RanKe beabstandet zum Leitmittel gehalten werden, worauf durch händische Betätigung einer Schließmechanik die Haltemittelteile miteinander verbunden und derart das Haltemittel am Leitmittel festgelegt und eine Führung einer Ranke gebildet werden und in einer Weiterführung des Verfahrens bei einem Offenstellen der Schließmechanik der Vorrichtung das Haltemittel freigegeben wird und in der Folge ggf. nach einem Durchtrennen einer eine Clip-Kette bildende Verbindung ein Einbringen eines weiteren geöffneten Haltemittels aus dem Speichervorrat in die offengestellte Schließeinrichtung erfolgt.

Wesentliche mit der Erfindung erzielte Vorteile sind darin zu sehen, dass derart ein größtmöglicher Automatisierungsgrad bei einer Clipfestlegung an einem Leitmittel erzielbar ist und die Qualität der Befestigung ein gleichbleibend hohes Niveau aufweist.

Das erfindungsgemäße Ziel, ein funktionssicheres Haltemittel mit besten Verarbeitungseigenschaften zu erstellen, wird erreicht, wenn die Kontur quer zur Hohlaxrichtung der Teile der Rastverbindung von beiden Enden der Halbschalen im offenen Zustand des Haltemittels gleich geformt ist.

In vorteilhafter Welse wird durch diese geometrische Ausführung erreicht, dass die offenen Halbschalen des Haltemittels unabhängig von der Lage des Rasthakens oder der Rastleiste in die Einrichtung zum Schließen desselben einbringbar sind.

Wenn gemäß einer bevorzugten Ausführungsform des Haltemittels die Halbschalen im Bereich der halben Schalenbogenlänge zwischen den Flanschteilen vorzugsweise bündig mit der Außenkontur der Flansche diese verbindende Stege aufweisen, wird einerseits ein sicherer Eingriff der Teile der Schlleßmechanik bei einer Zusammenführung der Halbschalen erreicht und andererseits die Stabilität des Clips bei seitlicher Beanspruchung erhöht.

Wenn weiters nach einer bevorzugten Ausgestaltung der Erfindung vorgesehen ist, dass gegenüberliegend außen an den Halbschalen benachbart dem Filmscharnier zwei Zentrierlaschen angeordnet sind, so wird damit der Clip in der Einrichtung in Position gehalten. Nach dem Anlegen des Leitmittels bzw. der Schnur am Filmscharnier erfolgt ein Biegen der Halbschalen, wobei die Zentrierlaschen ein Einschließen der Schnur bewirken und das Haltemittel danach freigegeben wird.

Das weitere Ziel dar Erfindung wird bei einem gattungsgemäßen Mittel dadurch erreicht, dass in einer Reihe gleichartige offene Haltemittel distanziert miteinander durch Verbindungsstege, insb. zwei Stege, verbunden sind und eine Kette, ggf. Magazinkette, bilden, wobei die Verbindungsstege auf einer Linie senkrecht zur gewünschten Biegelinie der Magazinkette angeordnet sind.

Die derart erreichten Vorteile gemäß der Erfindung sind im Wesentlichen darin zu sehen, dass eine Kette aus miteinander verbundenen offenen Haltemitteln selbst ein Magazin oder einen Speicher darstellt, ohne dass ein austauschbares Magazingehäuse für eine Bereitstellung erforderlich ist. Die Magazinkette wird ggf. mit einer Führung in die Vorrichtung eingeschoben, wobei der erste Clip in einer Klinkenhalterung einrastet und in der Folge zur Montage bereit steht.

An Hand von Zeichnungen, die nur eine Ausführungsform der Erfindung darstellen, soll diese näher erläutert werden.

Es zeigen:
- Fig. 1: ein Haltemittel in Draufsicht
- Fig. 2: ein Haltemittel
- Fig. 3: ein offenes Haltemittel
- Fig. 4: ein Filmscharnier
- Fig. 5: ein Seitenteil einer Halbschale
- Fig. 6: ein Rasthaken
- Fig. 6a: ein Rasthakenpaar
- Fig. 7: eine Rastführung
- Fig. 8: eine Vorrichtung zum Anbringen von Haltemitteln

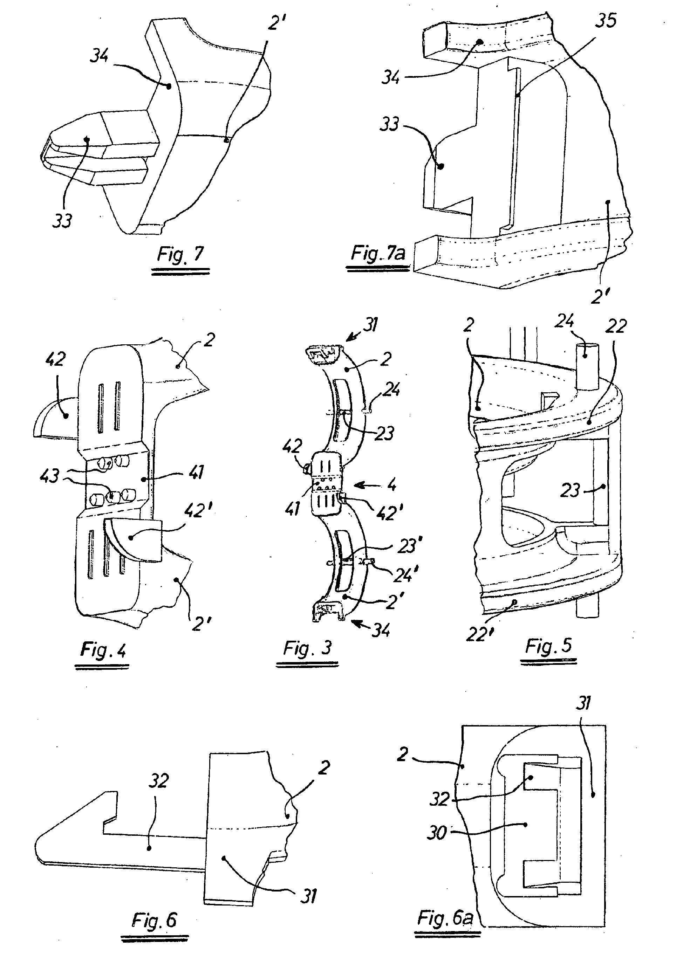

- Fig. 7a: eine Rastieiste

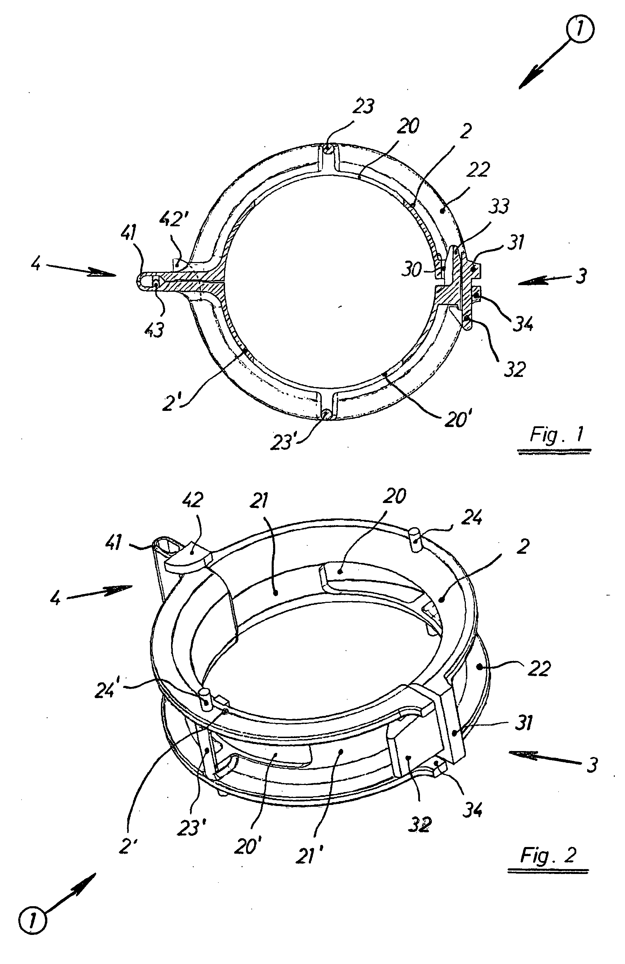

Fig. 2 bis 8 sind Schrägrissdarstellungen

Die nachfolgende Bezugszeichenliste soll den Überblick bei der Teilbeschreibung erleichtern:
- 1: Haltemittel bzw. Clip
- 2,2': Halbschalen
- 20,20': Durchbruch
- 21,21': Zylinderteil
- 22,22': Flanschteil
- 23,23': Flanschsteg
- 24,24': Verbindungssteg
- 3: Rastverbindung
- 30: Führungshohl
- 31: Rasthakenaußentell
- 32: Rasthaken
- 33: Führungszapfen
- 34: Einrastteil
- 35: Einrastleiste
- 4: Filmscharnier
- 41: Biegefläche
- 42,42': Zentrierlaschen
- 43: Klemmittel

In Fig. 1 ist ein Haltemittel bzw. ein Clip 1 mit geschlossenen Halbschalen 2,2' im Schnitt quer zur Hohlaxe dargesteilt.

Fig. 2 zeigt ein geschlossenes Haltemittel im Schrägriss.

Die Halbschalen 2,2' weisen zur Führung von wachsenden Ranken jeweils ein ein Hohl bildendes Zylinderteil 21,21' mit beidseitig nach außen gerichteten Flanschteilen 22,22' auf. Im Bereich der Enden der Halbschalen 2,2' sind an diesen einerseits eine Rastverbindung 3 und dieser gegenüberliegend andererseits ein Filmscharnier 4 ausgeformt.

In halber Bogenlänge der Halbschalen 2,2' weisen die Zylinderteile 21,21' je einen Durchbruch 20.20' auf. wobei im Bereich der Mitte der Durchbrüche die Flanschteile 22,22' außen mittels eines Flanschsteges 23 verbunden sind.

Die Rastverbindung 3 wird mit einem Rasthakenteil 31 mit einem Führungshohl 30 und zwei Rasthaken 32 an einem Halbschalenende und einem Einrastteil 34 mit einem Führungszapfen 33 und einer Einrastleiste 35 am anderen Halbschalenende gebildet, wobei im geschlossenen Zustand der Verbindung der Führungszapfen 33 In das Führungshohl 30 einragt und die Rasthaken 32 an der Einrastleiste 35 anliegen.

In Axrichtung des Führungshohls 30 für die Ranke bzw. in Draufsicht auf das Haltemittel bzw. auf den Clip 1 weisen bezogen auf die Verbindungsfläche der Halbschalen 2,2', das Rasthakenaußenteil 31 und das Einrastteil 34 die gleiche Kontur auf.

Gegenüberliegend der Rastverbindung 3 sind die Halbschalen 2,2' durch ein Filmscharnier 4 miteinander verbunden.

Die Biegefläche 41 des Filmscharniers 4 ist außerhalb der Flanschteile 22,22' positioniert, ein Klemmmittel 43 für ein Leitmittel zur rutschfesten Festlegung des Haltemittels 1 an diesem.

An den Enden der Flanschteile 22,22' sind auf diesen gegenüberliegend außen je eine Zentrierlasche 42,42' angeordnet, durch welche bei einem Schließen der Halbschalen 2.2' ein Leitmittel, z.B. eine Schnur, in den Bereich des Klemmmittels einschließbar ist.

Verbindungsstege 24 von den Flanschteilen 22,22' eines Haltemittels 1 wegführend dienen einer Magazinbildung mit einer Vielzahl von nacheinander angeordneten miteinander verbundenen offenen Haltemitteln.

Fig. 3 zeigt ein Haltemittel 1 mit offengestellten Halbschalen 2,2', welche durch ein Filmscharnier 4 verbunden sind.

Die Biegefläche 41 weist Klemmmittel 43 auf, die bei geschlossenen Halbschalen 2,2' das Haltemittel 1 am Führungsmittel festlegen. Um ein verschiebungsfreies Klemmen des Führungsmittels im Bereich der Biegefläche 41 sicher zu stellen, sind an den Halbschalen 2,2' außen gegenüberliegend je eine Zentrierlasche 42,42' angeordnet, die bei einem Schließen der Halbschalen 2,2' das Leitmittel in den Bereich der Klemmmittel 43 einschließen.

Bei Offenstellung des Haltemittels 1 in einer erfindungsgemäßen Einrichtung zum Schließen der Halbschalen 2,2' können die Zentrierlaschen 42,42' auch als Rückhalteteile im ersten Teil des Schließvorganges wirken. Ein Schließvorgang selbst bis zu einem Zusammenführen des Rasthakenaußenteiles 31 und des Einrasfteiles 34 erfolgt durch an Flanschstegen 23,23' angreifende Führungsarme, welche vorzugsweise weggesteuert bzw. kulissengesteuert sind.

Eine Magazinbildung wird mittels Zusammenschließens von einer Vielzahl von offenen Haltemitteln 1 durch Verbindungsstege 24,24' bewerkstelligt.

Fig. 4 zeigt ein Filmscharnier 4 in vergrößerter Darstellung.

Fig. 5 veranschaulicht mit verbesserter Deutlichkeit einen mittleren Bereich einer Halbschale 2 mit einem zwischen den Flanschteilen 22,22' außenseitig angeordneten Flanschsteg 23.

In Fig. 6 und Fig. 6a sind jeweils in einer Schrägrissdarstellung der Rasthakenaußenteil 31 mit einem Führungshohl 30 und mit den vorragenden Rasthaken 32 einer Rastverbindung 3 dargestellt, wobei dieser eine Sicherungsrille für die Einrastleiste 35 aufweisen kann.

In Fig. 7 und Fig. 7a sind der Einrastteil 34 mit einem Führungszapfen 33 und einer Einrastleiste 35 einer Rastverbindung 3 der Schrägrissdarstellung zu entnahmen.

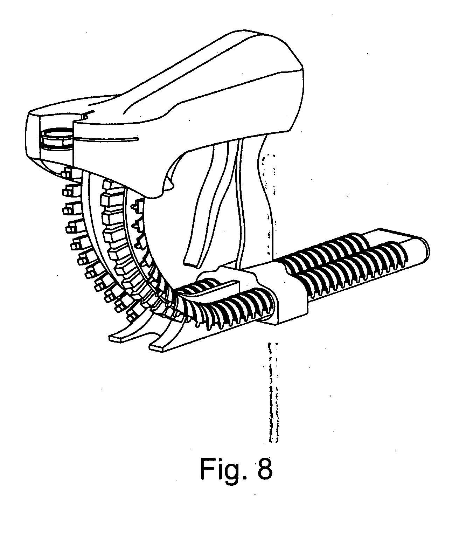

Fig. 8 zeigt eine betriebsbereite Vorrichtung zum Anbringen und Schließen von Haltemitteln bzw. Clips. Am Oberteil des Gehäuses ist ein Sackschlitz zur Führung eines Leitmittels bzw. einer Schnur für eine Anlage an ein Filmscharnier eines Haltemittels ausgebildet. Die Haltemittel werden aus einer Magazinkette bereitgestellt.

## Patentansprüche

1. Vorrichtung zum Anbringen von Haltemitteln (1) bzw. Clips an Leitmitteln, insb. an Schnüren, zur Führung von Rankengewächsen, **dadurch gekennzeichnet, dass** die Vorrichtung, in Gebrauch, mit mindestens einem bodenseitig bzw. unter einem Halteteil angeordneten Speicher, einem Magazin oder einem dgl. Teil zur sequenziellen Bereitstellung von offenen und/oder mit zwei Halbschalen (2, 2') ausgeformten Haltemitteln (1) und einer mit diesem verbundenen Einrichtung zum Schließen der Halbschalen (2, 2') vom Haltemittel (1) bei Festlegung desselben am Leitmittel und Umfassen der Ranke mit Handbefätigung gebildet ist und die Mechanik für einen Einzug und die sequenzielle Bereitsteitung des offenen Haltemittels und die Einrichtung zum Schließen der Halbschalen (2, 2') desselben sowie dessen Freigabe wirkverbunden sind.

2. Vorrichtung nach Anspruch 1, **dadurch gekennzeichnet, dass** diese Vorrichtung ein Halteteil, insb. ein durch eine menschliche Hand umfassbares Vorrichtungsteil, vorzugsweise in einer Pistolengriffform, und einen Hebel zum Auslösen oder Durchführen des Schließvorganges der Halbschalen (2, 2') des Haltemittels (1) aufweist, wobei die Schließebene bzw. die Ebene, in welcher die Halbschalen (2, 2') beim Schließen des Haltemittels bewegt werden, Im Wesentlichen im rechten Winkel zur Längserstreckung des Halteteiles bzw. Griffteiles positioniert ist.

3. Vorrichtung nach Anspruch 1 oder 2, **dadurch gekennzeichnet, dass** das Teil zur sequenziellen Bereitstellung von offengestellten, mit zwei Halbschalen (2, 2') gebildeten und mittels Filmscharniers verbundenen Haltemitteln (1) bzw. Clips als Führungskanal mit einem von der Schließeinrichtung steuerbaren Einzugsmittel und Trennmittel für aneinandergereihte und miteinander zu einer Clip-Kette verbundene Haltemittel gebildet ist.

4. Vorrichtung nach einem der Ansprüche 1 bis 3, **dadurch gekennzeichnet, dass** diese Vorrichtung in einem Verbindungsbereich des geöffnet im Schließbereich der Einrichtung positionierten Haltemittels (1) senkrecht zur Schließebene mindestens eine, vorzugsweise zwei. distanzierte Vertiefung(en) bzw. einen, vorzugsweise zwei Sackschlitz(e) im Gehäuse zur Führung und/oder Bereitstellung des Leitmittels im Verschlussbereich oder zur geführten Anlage an ein Filmscharnier des Haltemittels aufweist.

5. Verfahren zum Anbringen von Haltemitteln (1) bzw. Clips an Leitmitteln, insb. an Schnüren, zur Führung von Rankengewächsen nach einem den Ansprüche 1 bis 4 **dadurch, gekennzeichnet, dass** In einer Vorrichtung bei Aktivierung derselben aus einem Speicher, einem Magazin oder einem dgl. Teil jeweils ein Haltemittel im geöffneten, schlißbereiten Zustand in eine Einrichtung eingebracht und für ein Schließen der Haltemittelteile durch diese positioniert wird, wonach mittels Führens der Vorrichtung ein Leitmittel senkrecht zur Schließebene bzw. Bewegungsebene in einem Verbindungsbereich der Haltemittelteile in Stellung gebracht oder an das Filmscharnier des geöffneten Haltemittels angelegt und eine Ranke beabstandet zum Leitmittel gehalten werden, worauf durch händische Betätigung einer Schließmechanik die Haltemittelteile miteinander verbunden und derart das Haltemittel am Leitmittel festgelegt und eine Führung einer Ranke gebildet werden und in einer Weiterführung des Verfahrens bei einem Offenstellen der Schließmechanik der Vorrichtung das Haltemittel freigegeben wird und in der Folge ggf. nach einem Durchtrennen einer eine Clip-Kette bildende Verbindung ein Einbringen eines weiteren geöffneten Haltemittels aus dem Speichervorrat in die offengestellte Schließeinrichtung erfolgt.

6. Haltemittel bzw. Clip (1), zur Verwendungen in einer Vorrichtung gemäß den Ansprüche 1 bis 4, zur Führung von Rankengewächsen an einem Leitmittel, insb. an einer Schnur, bestehend aus zwei Halbschalen (2,2'), welche miteinander mittels eines Filmscharnleres (4) mit einer Klemmvorrichtung (41) für ein Leitmittel in Verbindung stehen und endenseitig eine aus kooperierenden Teilen bestehende Rastverbindung (3) aufweist, wobei die Halbschalen (2,2') im geschlossenen Zustand ein Führungshohl für eine Ranke bilden und die Halbschalen (2,2') in Axrichtung des Hohles im Querschnitt im Wesentlichen aus einem zylindrischen Mittelteil und nach außen mit gerundeten Übergängen weitergeführt zwei Flanschteile (22,22') aufweisen, **dadurch gekennzeichnet, dass** die Kontur quer zur Hohlaxrichtung der Teile (31,34,32,33) der Rastverbindung (3) von beiden Enden der Halbschalen (2,2') im offenen Zustand des Haltemittels (1) gleich geformt ist.

7. Haltemittel (1) nach Anspruch 6, **dadurch gekennzeichnet, dass** die Halbschalen (2,2') im Bereich der halben Schalenbogenlänge zwischen den Flanschteilen (22,22'), vorzugsweise bündig mit der Außenkontur der Flansche Stege (23,23') aufweisen.

8. Haltemittel nach Anspruch 6 oder 7, **dadurch gekennzeichnet, dass** gegenüberliegend außen an den Halbschalen (2,2') benachbart dem Filmscharnier (4) zwei Zentrierlaschen (42,42') angeordnet sind.

9. Mittel zur sequenziellen Bereitstellung von offenen, aus zwei Halbschalen (2,2') gebildeten Haltemitteln (1) gemäß der Ansprüche 6 bis 8 für Rankengewächse zur Verwendung in einer Vorrichtung gemäß der Ansprüche 1 bis 4, **dadurch gekennzeichnet, dass** in einer Reihe gleichartige offene Haltemittel (1) distanziert miteinander durch Verbindungstege (24), insb. zwei Stege (24,24'), verbunden sind und eine Kette, ggf. Magazinkette, bilden, wobei die Verbindungsstege (24,24') auf einer Linie senkrecht zur gewünschten Biegelinie der Magazinkette angeordnet sind.

## Claims

1. A device for attaching retaining means (1) or clips on guide means, in particular on strings, for training vines, **characterized in that** the device, in use, having at least one reservoir arranged at the bottom or under a retaining part, a magazine or such a part for the sequential provision of retaining means (1) which are open and/or formed with two half shells (2, 2') and a device connected to said retaining means (1) for closing the half shells (2, 2') is formed by the retaining means (1) when fixing the same to the guide means and enclosing the vine with manual activation and the mechanics for a collection and the sequential provision of the open retaining means and the device for closing the half-shells (2, 2') of the same as well as its release are operatively connected.

2. A device according to claim 1, **characterized in that** said device has a retaining part, in particular, a device part which can be grasped by a human hand, preferably in a pistol grip form, and a lever for triggering or implementing the closing process of the half shells (2, 2') of the retaining means (1), wherein the closing plane or the plane in which the half shells (2, 2,') are moved during the closing of the retaining means, is essentially at a right angle to the longitudinal extension of the retaining part or handle part.

3. A device according to claim 1 or 2, **characterized in that** the part for the sequential provision of retaining means (1) positioned open, formed with two half shells (2, 2') and connected by means of a film hinges or clips is formed as a training channel with a collection means and a release means controllable by the closing device for retaining means strung together or connected with each another to a clip chain.

4. A device according to claim 1 or 3, **characterized in that** said device in a connection area of the opened retaining means (1) positioned in the closing area of the device perpendicular to the closing plane has at least one, preferably two, distanced recess(es) or one, preferably two sack slot(s) in the housing for the guiding and/or provision of the guide means in the closure area or for the guided arrangement on a film hinge of the retaining means.

5. A method for the attachment of retaining means (1) or clips in particular on strings, for training vines according to one of claims 1 to 4, **characterized in that** in a device for activation of the same from a reservoir, a magazine or such a part in each case a retaining means in the opened, ready to be closed condition is introduced into a device and is positioned for a closing of the retaining means parts by the latter, after which by means of guiding the device a guide means is brought into position perpendicular to the closing plane or movement plane in a connection area of the retaining means parts or is applied to the film hinge of the opened retaining means and a vine is held spaced apart from the guide means, whereupon through manual activation of a closing mechanism the retaining means parts are connected with each other and in such a manner the retaining means are fixed on the guide means and a training of a vine is formed and in a continuation of the method in an open position of the closing mechanism of the device the retaining means is released and as a result, if necessary, after a severing of a connection forming a clip chain an insertion of another opened retaining means from the reservoir supply occurs in the open positioned closing device.

6. A retaining means or clip for uses in a device according to claims 1 to 4, for training vines on a guide means, or on a string, consisting of two half shells (2, 2'), which are connected to each other by means of a film hinge (4) with a clamping device (41) for a guide means and has a click-on connection (3) on the end side consisting of cooperating parts, wherein the half shells (2, 2') in the closed condition form a guide hollow for a vine and the half shells (2, 2') have two flange parts (22, 22') in the axial direction of the hollow in the cross section essentially from a cylindrical center part and continued outwards with rounded transitions, **characterized in that** the contour transverse to the hollow axial direction of the parts (31, 34, 32, 33) of the click-on connection (3) of both ends of the half shells (2, 2') is formed the same in the open condition of the retaining means (1).

7. A retaining means (1) according to claim 6, **characterized in that** the half shells (2, 2') in the area of the half shell arc length between the flange parts (22, 22') preferably have webs (23, 23') flush with the outer contour of the flanges.

8. A retaining means according to claim 6 or 7, **characterized in that** two centering straps (42, 42') are arranged adjacent to the film hinge (4) opposite on the outside of the half shells (2, 2').

9. Means for the sequential provision of open retaining means (1) formed from two half shells (2, 2') according to claims 6 to 8 for vines for use in a device according to claims 1 to 4, **characterized in that** similar open retaining means (1) distanced from each other are connected in a row by connection webs (24), in particular two webs (24, 24') and form a chain, if necessary, a magazine chain, wherein the connection webs (24, 24') are arranged on a line perpendicular to the desired bending line of the magazine chain.

## Revendications

1. Dispositif d'application de moyens de maintien (1) ou de clips sur des moyens de guidage, plus particulièrement sur des cordons, pour le guidage de plantes grimpantes, **caractérisé en ce que** le dispositif, lors de son utilisation, est constitué d'au moins un réservoir disposé sur le sol ou sous une partie de maintien, d'un magasin ou d'un élément similaire pour la distribution séquentielle de moyens de maintien (1) ouverts et/ou formés de deux demi-coques (2, 2'), et d'un dispositif relié avec celui-ci pour la fermeture des demi-coques (2, 2') du moyen de maintien (1) en fixant celui-ci sur le moyen de guidage et l'enveloppement de la vrille avec un actionnement manuel et le mécanisme pour la rétraction et la distribution séquentielle du moyen de maintien ouvert et le dispositif de fermeture des demi-coques (2, 2') de celui-ci ainsi que leur déverrouillage sont reliés de manière fonctionnelle.

2. Dispositif selon la revendication 1, **caractérisé en ce que** ce dispositif comprend un moyen de maintien, plus particulièrement une partie de dispositif pouvant être saisi par une main humaine, de préférence avec une forme de poignée de pistolet, et un levier pour le déclenchement ou la réalisation d'un processus de fermeture des demi-coques (2, 2') du moyen de maintien (1), le plan de fermeture ou le plan dans lequel les demi-coques (2, 2') sont déplacés lors de la fermeture du moyen de maintien, globalement à angle droit par rapport à l'extension longitudinale de la partie de maintien ou de la partie de préhension.

3. Dispositif selon la revendication 1 ou 2, **caractérisé en ce que** la partie permettant la distribution séquentielle des moyens de maintien (1) ouverts, formés de deux demi-coques (2, 2') reliées à l'aide d'un film-charnière, ou de clips, est conçue comme un canal de guidage avec un moyen de rétraction contrôlable par le dispositif de fermeture et des moyens de séparation pour des moyens de maintien juxtaposés et reliés entre eux en une chaîne de clips.

4. Dispositif selon l'une des revendications 1 à 3, **caractérisé en ce que** ce dispositif comprend, dans une zone de liaison du moyen de maintien (1) en position ouverte dans la zone de fermeture du dispositif, perpendiculaire au plan de fermeture, au moins un, de préférence deux creux disposés à une certaine distance l'un de l'autre ou une, de préférence deux fente(s) dans le boîtier pour le guidage et/ou la distribution du moyen de guidage dans la zone de fermeture ou pour l'appui guidé contre un film-charnière du moyen de maintien.

5. Procédé d'application de moyens de maintien (1) ou de clips sur des moyens de guidage, plus particulièrement sur des cordons, pour le guidage de plantes grimpantes selon l'une des revendications 1 à 4, **caractérisé en ce que**, dans un dispositif, lors de l'activation de celui-ci à partir d'un réservoir, d'un magasin ou d'une partie similaire, un moyen de maintien est introduit dans l'état ouvert, prêt à la fermeture, dans un dispositif et est positionné pour une fermeture des parties du moyen de maintien par celui-ci, un guidage du dispositif permettant de disposer un moyen de guidage perpendiculairement par rapport au plan de fermeture ou au plan de déplacement dans une zone de liaison des parties du moyen de maintien ou de l'appuyer contre le film-charnière du moyen de maintien ouvert et de maintenir une vrille à une certaine distance du moyen de guidage, un actionnement manuel d'un mécanisme de fermeture permettant ensuite de relier entre elles les parties des moyens de maintien et de fixer ainsi le moyen de maintien au moyen de guidage et de guider une vrille et, dans une continuation du procédé lors de l'ouverture du mécanisme de fermeture du dispositif, le moyen de maintien est déverrouillé et, par la suite, le cas échéant après une séparation d'une liaison formant une chaîne de clips, un autre moyen de maintien ouvert provenant du réservoir est placé dans le dispositif de fermeture en position ouverte.

6. Moyen de maintien (1), destiné à être utilisé dans un dispositif selon les revendications 1 à 4, pour le guidage de plantes grimpantes sur un moyen de guidage, plus particulièrement sur un cordon, constitué de deux demi-coques (2, 2') reliées entre elles à l'aide d'un film-charnière (4) avec un dispositif de blocage (41) pour un moyen de guidage et comprenant, aux extrémités, un dispositif de liaison par encliquetage (3) constitué de parties en interaction, les demi-coques (2, 2') formant, dans l'état fermé, un espace vide de guidage pour une vrille et les demi-coques (2, 2') comprenant, dans la direction axiale de l'espace vide, deux parties de bridage (22, 22'), constituées globalement, dans la section transversale, d'une partie centrale cylindrique et prolongées vers l'extérieur par des jonctions arrondies, en ce que le contour perpendiculaire par rapport à l'axe de l'espace vide des parties (31, 34, 32, 33) de la liaison par encliquetage (3) est constitué, de manière identique, des deux extrémités des demi-coques (2, 2') dans l'état ouvert du moyen de maintien (1).

7. Moyen de maintien (1) selon la revendication 6, **caractérisé en ce que** les demi-coques (2, 2') présentent, au niveau de la moitié de la longueur des coques entre les deux parties de bridage (22, 22'), des nervures (23, 23') de préférence alignées avec le contour externe des brides.

8. Moyen de maintien (1) selon la revendication 6 ou 7, **caractérisé en ce que**, en face à l'extérieur sur les demi-coques (2, 2'), deux pattes de centrage (42, 42') sont disposées à proximité du film-charnière (4).

9. Moyens de distribution séquentielle de moyens de maintien (1) ouverts constitués de deux demi-coques (2, 2') selon les revendications 6 à 8 pour des plantes grimpantes, destinés à être utilisés dans un dispositif selon les revendications 1 à 4, **caractérisé en ce que** des moyens de maintien (1) ouverts de même type sont reliés entre eux à une certaine distance par des nervures de liaison (24), plus particulièrement par deux nervures (24, 24') et forment une chaîne, le cas échéant une chaîne de magasin, les nervures de liaison (24, 24') étant disposées sur une ligne perpendiculaire à la ligne de pliage souhaité de la chaîne de magasin.
